(19) **Europäisches Patentamt**

**European Patent Office**

**Office européen des brevets**

(11) Veröffentlichungsnummer: **0 217 131 B1**

(12) ## EUROPÄISCHE PATENTSCHRIFT

(45) Veröffentlichungstag der Patentschrift: **24.06.92**

(21) Anmeldenummer: **86111806.5**

(22) Anmeldetag: **26.08.86**

(51) Int. Cl.⁵: **H04Q 1/36**, H04Q 1/32

(54) **Verfahren zur von der Leitungslänge von Teilnehmeranschlussleitungen eines Fernmeldevermittlungssystems unabhängigen Ermittlung der zeitlichen Kenngrössen von Wahlimpulsen.**

(30) Priorität: **30.09.85 DE 3534829**

(43) Veröffentlichungstag der Anmeldung:
**08.04.87 Patentblatt 87/15**

(45) Bekanntmachung des Hinweises auf die Patenterteilung:
**24.06.92 Patentblatt 92/26**

(84) Benannte Vertragsstaaten:
**AT BE CH DE FR GB IT LI LU NL**

(56) Entgegenhaltungen:
**FR-A- 2 371 092**
**US-A- 4 326 105**

**PATENT ABSTRACTS OF JAPAN, Band 3, Nr. 99 (E-132), 22. August 1979, Seite 152 E 132; & JP-A-54 78 911**

(73) Patentinhaber: **SIEMENS AKTIENGESELL-SCHAFT**
**Wittelsbacherplatz 2**
**W-8000 München 2(DE)**

(72) Erfinder: **Held-Elbert, Gabriele**
**Bajuwarenstrasse 15**
**W-8029 Lochhofen(DE)**
Erfinder: **Kaiser, Wolfgang, Ing. grad.**
**Appenzellerstrasse 113/7**
**W-8000 München 71(DE)**
Erfinder: **Koch, Wilhelm, Dipl.-Ing. (FH)**
**Mauthäuslstrasse 49**
**W-8000 München 70(DE)**
Erfinder: **Schmutzler, Wener**
**Asambogen 24 b**
**W-8080 Fürstenfeldbruck(DE)**

**Beschreibung**

Die Erfindung betrifft ein Verfahren zur von der Leitungslänge von Teilnehmeranschlußleitungen eines Fernmeldevermittlungssystems unabhängigen in der jeweiligen Teilnehmeranschlußleitung vorgenommenen Ermittlung der zeitlichen Kenngrößen von mit Hilfe eines Nummernschalters in der über die Teilnehmeranschlußleitung angeschlossenen Teilnehmerendgerät durch Schleifenunterbrechungen erzeugten Wahlimpulsen.

Aus der Patentanmeldung FR-A-2 371 092 ist ein solches Verfahren bekannt.

Die obengenannte Ermittlung von zeitlichen Kenngrößen von Wahlimpulsen spielt z.B. bei der Entstörung eines Teilnehmeranschlusses eine Rolle. Es wird hierbei das Impuls/Pausenverhältnis der Wahlimpulse gemessen und gemäß dem Zusammenhang

$$\text{Verhältnis} = \frac{\text{Pausendauer} \times 100}{\text{Pausendauer} + \text{Impulsdauer}} \%$$

bewertet.

Die hierzu in der Teilnehmeranschlußschaltung gemessenen Zeitwerte für die Impulsdauer und die Pausendauer von Wahlimpulsen sind von der Länge der Teilnehmeranschlußleitung abhängig, so daß sie keine genaue Auskunft über die tatsächlichen Verhältnissse beim Nummernschalter im Teilnehmerendgerät geben. Da die Leitungslängen von Teilnehmeranschluß zu Teilnehmeranschluß unterschiedlich sind, läßt sich dieser Einfluß auch nicht pauschal berücksichtigen.

Die Aufgabe der Erfindung besteht daher darin, ein Verfahren zur Ermittlung der zeitlichen Kenngrößen von Wahlimpulsen der obengenannten Art anzugeben, bei dem der Einfluß der Leitungslänge der Teilnehmeranschlußleitungen ausgeschlossen ist.

Erfindungsgemäß wird diese Aufgabe dadurch gelöst, daß während der ersten Impulspause einer Wahlimpulsserie eine Messung einer durch die Speisespannungsquelle auf der Teilnehmeranschlußleitung hervorgerufenen Spannung vorgenommen wird und entsprechend der von der dabei ermittelten von der Leitungslänge der Teilnehmeranschlußleitung abhängigen Spannungsamplitude die für die Impulsdauer und die Impulspause der Wahlimpulsserie gemessenen Zeiten korrigiert werden.

Um bei der genannten Korrektur Einflüsse von Toleranzen der Speisespannung auszuschließen wird gem. einer weiteren Ausgestaltung der Erfindung während der Dauer des ersten durch eine Schleifunterbrechung hervorgerufenen Wahlimpulses einer Wahlimpulsserie eine Messung der Speisespannung vorgenommen und die Abweichung des sich dabei ergebenden Wertes von einem Mittelwert zur Korrektur des in der ersten Impulspause der Wahlimpulsserie ermittelten Spannungswertes herangezogen.

Als Meßpunkt für die genannten Spannungsmessungen kommt gem. einer ersten Ausführungsform für die Spannungsmessung in der Impulspause die b-Ader und für die Spannungsmessung während der Dauer dessen Wahlimpulses die a-Ader der Teilnehmeranschlußleitung infrage. Gem. einer zweiten Ausführungsvariante wird sowohl während der Dauer des ersten Wahlimpulses als auch während der Dauer der ersten Impulspause die Spannung zwischen der a-Ader und der b-Ader gemessen.

Nachstehend wird die Erfindung anhand eines Ausführungsbeispiels unter Bezugnahme auf eine Zeichnung näher erläutert.

In der Zeichnung zeigen:

Fig. 1 ein Zeitdiagramm,

Fig. 2 eine Schaltungsanordnung zur Durchführung des erfindungsdgemäßen Verfahrens zusammen mit einer Teilnehmeranschlußleitung und einem daran angeschlosssenem Endgerät sowie mit einem Teil der Teilnehmeranschlußschaltung.

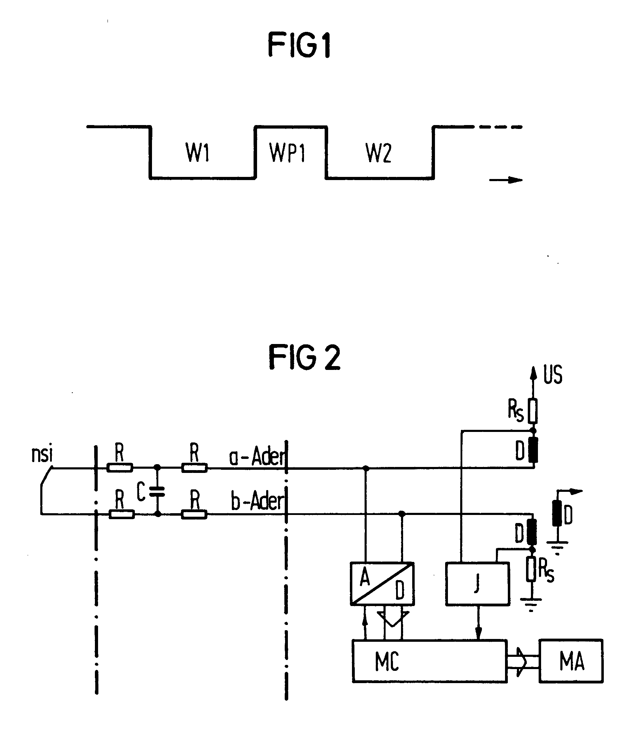

In der Figur 2 ist eine Teilnehmeranschlußleitung TL mit den Adern a und b durch Leitungswiderstände R und eine Leitungskapazität C symbolisiert.

Von dem an die Teilnehmeranschlußleitung angeschlossenen Endgerät ist lediglich der Kontakt nsi des Nummernschalters dargestellt, mit dessen Hilfe während der Wahl die Teilnehmerleitungsschleife unterbrochen und geschlossen wird.

Von der Teilnehmeranschlußschaltung für diese Teilnehmeranschlußleitung sind lediglich die Speisewiderstände RS dargestellt, die im Stromkreis einer Speisebatterie liegen, sowie die Wicklungen D des Sprachübertragers.

Die eigentliche zur Durchführung des erfindungsgemäßen Verfahrens, also zur Ermittlung der zeitlichen Kenngrößen der Wählimpulse in der erfindungsgemäßen Art und Weise dienende Schaltungsanordnung besteht zum einen aus einem Schleifenindikator I, mit dessen Hilfe der Schleifenzustand festgestellt wird, der also während des Betriebszustands der Wahl eine Aussage darüber liefert, ob gerade ein Schleifenschluß oder eine Schleifenunterbrechung vorliegt.

Zum anderen weist sie einen an die Adern a und b der Teilnehmeranschlußleitung angeschlossen Analog-Digital-Wandler A/D auf, der eine zwischen den Adern der Teilnehmeranschlußleitung gemessene Analogspannung in einen Digitalweret verwandelt. Die Anordnung dient also der vorerwähnten Verfahrensvariante, bei der sowohl in der Wahlimpulspause als auch während der Dauer eines Wahlimpulses die Spannung zwischen den Leitungsadern ausgewertet wird.

Die Schaltungsanordnung gem. Fig. 2 weist ferner einen Mikrokomputer MC auf, dem die Ausgangssignale sowohl des Analog-Digital-Wandlers als auch des Schleifenindikators zugeführt werden. Der Mikrokomputer MC steuert eine Meßwertanzeige MA.

Die Figur 1 zeigt die Zeitverhältnisse des Schleifenschlusses und der Schleifenunterbrechung während eines Teils des Betriebszustands der Wahl. Ausgehend von einem Zustand, in dem die Teilnehmerleitungsschleife geschlossen ist, wird der erste Wahlimpuls, siehe Zeitspanne W1 einer Wahlimpulsserie durch eine Schleifenunterbrechung hervorgerufen.

Erfindungsgemäß wird während der Dauer dieses ersten Wahlimpulses die Spannung zwischen den Adern a und b der Teilnehmerleitungsschleife, also die Speisespannung gemessen. Im Mikrokomputer MC wird die Relation des dabei ermittelten Spannungswertes zu einem Mittelwert der Speisespannung zu einem Korrekturfaktor verarbeitet.

Während der nachfolgenden ersten Wahlpause, siehe Zeitspanne WP1 in Fig. 1, in der die Teilnehmerleitungsschleife wieder geschlossen ist, erfolgt erneut eine Spannungsmessung zwischen der a-Ader und der b-Ader. Da während dieser Wahlpause im Teilnehmerendgerät die Sprechschaltung niederohmig überbrückt ist, stellt der dabei ermittelte Spannungswert ein Maß für die Leitungslänge der Teilnehmeranschlußleitung dar, und ergibt in Relation zum durch den erstgenannten Korrekturfaktor bereinigten Wert der von der Speisebatterie abgegebenen Speisespannung einen Korrekturfaktor, durch den die durch den Schleifenindikator gemessene Impulsdauer und Impulspause des ersten unmd der nachfolgenden Impulse der Wahlimpulsserie mit Hilfe des Mikrokomputers MC korrigiert werden. Die Meßwertanzeige MA zeigt also von der Länge der Teilnehmeranschlußleitung unabhängige Werte an.

Wie schon angedeutet, kann anstelle einer Spannungsmessung zwischen den Adern der Teilnehmeranschlußleitung während der Dauer des ersten Wahlimpulses die zwischen der b-Ader und einem Erdpotential führenden Schaltungspunkt herrschende Spannung gemessen und zur Bildung eines Korrekturfaktors für den Wert der Speisespannung herangezogen werden und zur Korrektur der Impulszeit und Pausenzeit die in der nachfolgenden Wahlpause zwischen der a-Ader und dem Erdpotential führendn Schaltungspunkt herrschende Spannung herangezogen werden.

## Patentansprüche

1. Verfahren zur von der Leitungslänge von Teilnehmeranschlußleitungen eines Fernmeldevermittlungssystems unabhängigen, in der jeweiligen Teilnehmeranschlußschaltung vorgenommenen Ermittlung der zeitlichen Kenngrößen von mit Hilfe eines Nummernschalters (nsi) in dem über die Teilnehmeranschlußleitung angeschlossenen Teilnehmerendgerät durch Schleifenunterbrechungen erzeugten Wahlimpulsen,
**dadurch gekennzeichnet,** daß
während der ersten Impulspause (WP1) einer Wahlimpulsserie eine Messung einer durch die Speisespannungsquelle auf der Teilnehmeranschlußleitung hervorgerufenen Spannung vorgenommen wird und entsprechend der von der dabei ermittelten von der Leitungslänge der Teilnehmeranschlußleitung abhängigen Spannungsamplitude die für die Impulsdauer und die Impulspause der Wahlimpulsserie gemessenen Zeiten (W1, W2... und WP1...) korrigiert werden.

2. Verfahren nach Patentanspruch 1,
**dadurch gekennzeichnet,** daß
während der Dauer des ersten durch eine Schleifenunterbrechung hervorgerufenen Wahlimpulses (W1) einer Wahlimpulsserie eine Messung der Speisespannung vorgenommen wird und daß die Abweichung des sich dab ei ergebenden Werts von einem Mittelwert zur Korrektur des in der ersten Impulspause (WP1) der Wahlimpulsserie ermittelten Spannungswerts herangezogen wird.

3. Verfahren nach Patentanspruch 1,
**dadurch gekennzeichnet,** daß
die Spannungsmessung während der ersten Impulspause der Wahlimpulsserie an der b-Ader der Teilnehmeranschlußleitung erfolgt.

4. Verfahren nach Patentanspruch 2,
**dadurch gekennzeichnet,** daß
die Spannungsmessung während der Dauer des ersten Wahlimpulses (W1) an der a-Ader der Teilnehmeranschlußleitung erfolgt.

5. Verfahren nach Patentanspruch 1,
**dadurch gekennzeichnet,** daß
die Spannungsmessung in der ersten Impulspause (WP1) der Wahlimpulsserie zwischen der a- und der b-Ader der Teilnehmeranschlußleitung erfolgt.

6. Verfahren nach Patentanspruch 2,
**dadurch gekennzeichnet,** daß
die Spannungsmessung während der Dauer des ersten Wahlimpulses (W1) der Wahlimpulsserie zwischen der a-Ader und der b-Ader der Teilnehmeranschlußleitung erfolgt.

## Claims

1. A method for determining, independently of the line length of subscriber lines of a telecommunication switching system, in the respective subscriber line circuit, the temporal characteristics of dialling pulses generated with the aid of a dial switch (nsi) by loop interruptions in the subscriber terminal connected via the subscriber line, characterised in that during the first interpulse space (WP1) of a dialling pulse series, a measurement of a voltage caused by the feed voltage source on the subscriber line is carried out and the times (W1, W2.....and WP1....) measured for the pulse duration and the interpulse space of the dialling pulse series are corrected in accordance with the voltage amplitude determined during this process and dependent on the line length of the subscriber line.

2. Method according to Claim 1, characterised in that during the period of the first dialling pulse (W1) of a dialling pulse series, caused by a loop interruption, a measurement of the feed voltage is carried out and in that the deviation of the resultant value from a mean value is utilised for correction of the voltage value determined in the first interpulse space (WP1) of the dialling pulse series.

3. Method according to Claim 1, characterised in that the voltage measurement is carried out during the first interpulse space of the dialling pulse series at the b wire of the subscriber line.

4. Method according to Claim 2, characterised in that the voltage measurement is carried out during the period of the first dialling pulse (W1) at the a wire of the subscriber line.

5. Method according to Claim 1, characterised in that the voltage measurement is carried out in the first interpulse space (WP1) of the dialling pulse series between the a and the b wire of the subscriber line.

6. Method according to Claim 2, characterised in that the voltage measurement is carried out during the period of the first dialling pulse (W1) of the dialling pulse series between the a wire and the b wire of the subscriber line.

## Revendications

1. Procédé de détermination, qui est indépendante de la longueur de lignes d'abonnés d'un système de commutation de télécommunications et est réalisée dans le circuit d'abonné respectif, des paramètres temporels d'impulsions de sélection produites à l'aide d'un commutateur de cadran d'appel (nsi) du poste d'abonné raccordé par l'intermédiaire de la ligne d'abonné,
    caractérisée par le fait qu'une mesure d'une tension produite par la source de tension d'alimentation dans la ligne d'abonné est exécutée pendant la première pause (WP1) entre les impulsions d'une série d'impulsions de sélection, et les temps (W1,W2... et WP1...) mesurés pour la durée des impulsions et la pause entre les impulsions de la série d'impulsions de sélection sont corrigés en fonction de l'amplitude de tension alors déterminée, qui dépend de la longueur de la ligne d'abonné.

2. Procédé suivant la revendication 1, caractérisé par le fait qu'une mesure de la tension d'alimentation est réalisée pendant la durée de la première impulsion de sélection (W1), qui est produite par une interruption de boucle, d'une série d'impulsions de sélection et que l'écart entre la valeur alors obtenue et une valeur moyenne est utilisée pour corriger la valeur de la tension déterminée pendant la première pause (WP1) entre les impulsions de la série d'impulsions de sélection.

3. Procédé suivant la revendication 1, caractérisé par le fait que la mesure de la tension est réalisée pendant la première pause entre les impulsions de la série d'impulsions de sélection dans le conducteur b de la ligne d'abonné.

4. Procédé suivant la revendication 2, caractérisé par le fait que la mesure de tension est exécutée pendant la durée de la première impulsion de sélection (W1) dans le conducteur a de la ligne d'abonné.

5. Procédé suivant la revendication 1, caractérisé par le fait que la mesure de tension pendant la première pause (WP1) entre les impulsions de la série d'impulsions de sélection est réalisée entre les conducteurs a et b de la ligne d'abonné.

6. Procédé suivant la revendication 2, caractérisé par le fait que la mesure de la tension est réalisée pendant la durée de la première impulsion de sélection (W1) de la série d'impulsions de sélection, entre les conducteurs a et b de la ligne d'abonné.

# FIG 1

W1  WP1  W2

# FIG 2